(19) **Europäisches Patentamt / European Patent Office / Office européen des brevets**

(11) **EP 2 449 783 B1**

(12) **FASCICULE DE BREVET EUROPEEN**

(45) Date de publication et mention de la délivrance du brevet:
**10.03.2021 Bulletin 2021/10**

(51) Int Cl.:
***H04N 19/52*** *(2014.01)*

(21) Numéro de dépôt: **10745325.0**

(22) Date de dépôt: **25.06.2010**

(86) Numéro de dépôt international:
**PCT/FR2010/051304**

(87) Numéro de publication internationale:
**WO 2011/001077 (06.01.2011 Gazette 2011/01)**

(54) **PRÉDICTION D'UN VECTEUR MOUVEMENT D'UNE PARTITION D'IMAGE COURANTE POINTANT SUR UNE ZONE DE RÉFÉRENCE QUI RECOUVRE PLUSIEURS PARTITIONS D'IMAGE DE RÉFÉRENCE, CODAGE ET DÉCODAGE UTILISANT UNE TELLE PRÉDICTION**

VORHERSAGE EINES BEWEGUNGSVEKTORS EINER AKTUELLEN BILDPARTITION IN ZEIGEPOSITION AUF EINE MEHRERE REFERENZBILDPARTITIONEN ABDECKENDE REFERENZZONE SOWIE CODIERUNG UND DECODIERUNG MIT EINER DERARTIGEN VORHERSAGE

PREDICTION OF A MOVEMENT VECTOR OF A CURRENT IMAGE PARTITION POINTING TO A REFERENCE ZONE THAT COVERS MULTIPLE REFERENCE IMAGE PARTITIONS AND ENCODING AND DECODING USING ONE SUCH PREDICTION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.07.2009 FR 0954623**

(43) Date de publication de la demande:
**09.05.2012 Bulletin 2012/19**

(60) Demande divisionnaire:
**21154498.6**

(73) Titulaire: **ORANGE
75015 Paris (FR)**

(72) Inventeurs:
• **JUNG, Joël
  F-78320 Le Mesnil Saint Denis (FR)**
• **LAROCHE, Guillaume
  F-35700 Rennes (FR)**
• **THIESSE, Jean-Marc
  F-75015 Paris (FR)**

(56) Documents cités:
**EP-A1- 1 351 510      WO-A1-2008/082158
WO-A2-2008/027192    US-A1- 2008 063 068**

• **JUAN LIU ET AL: "Adaptive Motion Vector Prediction Based on Spatiotemporal Correlation", WIRELESS COMMUNICATIONS, NETWORKING AND MOBILE COMPUTING, 2006. WICOM 2006.INTERNATIONAL CONFERENCE ON, IEEE, PI, 1 September 2006 (2006-09-01), pages 1-4, XP031074482, ISBN: 978-1-4244-0517-6**

**Description**

Arrière-plan de l'invention

La présente invention se rapporte de manière générale au domaine du traitement d'images, et plus précisément au codage et au décodage par compétition d'images numériques et de séquences d'images numériques.

Plusieurs procédés de codage et de décodage existent pour la transmission d'images. On distingue notamment des grands types de codage tels que le codage dit "intra" où une image est codée de manière autonome, c'est-à-dire sans référence à d'autres images, ou encore le codage dit "inter" qui consiste à coder une image courante par rapport à des images passées de manière à exprimer et ne transmettre que la différence entre ces images.

Les procédés de codage du type précité comprennent généralement une étape de codage prédictif selon laquelle des portions d'images, appelés blocs ou macroblocs, d'une image courante sont prédits par rapport à d'autres blocs ou macroblocs de référence, c'est-à-dire précédemment codés puis décodés.

Dans le cas par exemple de la norme H264/MPEG-4 AVC (d'après l'anglais "Advanced Video Coding"), le codage prédictif d'un macrobloc consiste à découper les macroblocs selon une pluralité de partitions ayant généralement la forme de blocs de plus petite taille.

Plus précisément dans le cas du codage inter conforme à la norme précitée, le macrobloc courant à coder peut être partitionné selon les modes 16x16, 8x16, 16x8 et 8x8. Si le mode 8x8 est sélectionné, chaque bloc 8x8 est à nouveau partitionné selon les modes 8x8, 4x8, 8x4 et 4x4. Chaque bloc courant est comparé à un ou plusieurs blocs respectivement d'une ou de plusieurs images de référence. On obtient alors un vecteur mouvement qui décrit le mouvement entre le bloc courant et le bloc de référence ayant la même position que le macrobloc courant dans l'image précédente. Un prédicteur de ce vecteur mouvement est alors calculé afin de coder le résiduel entre le vecteur mouvement précité et le vecteur mouvement prédicteur calculé.

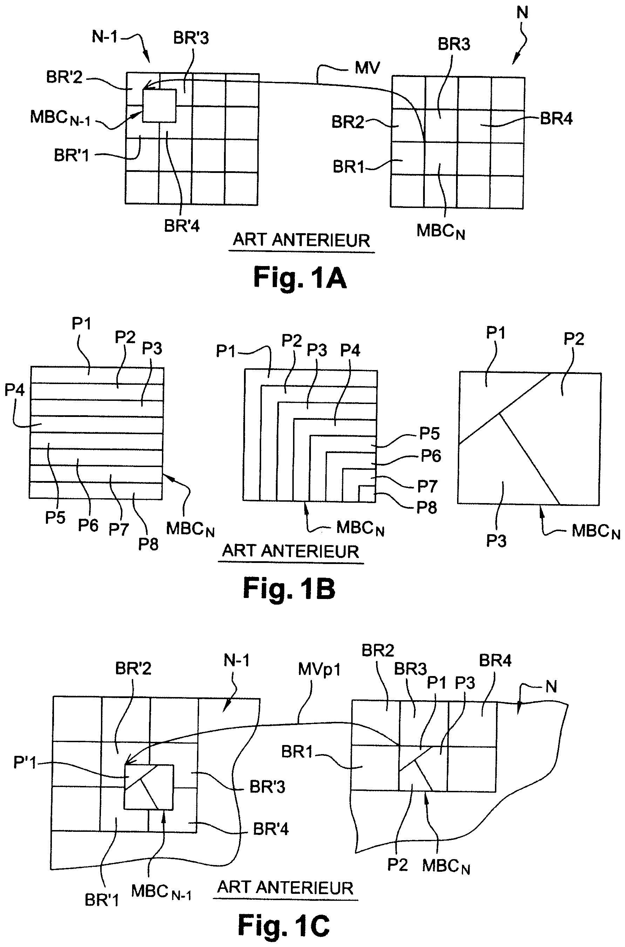

Une telle prédiction du vecteur mouvement n'est pas adaptée à tous les types de partitionnement et en particulier au cas où le macrobloc de référence recouvre plusieurs partitions de référence de l'image de référence. Une telle situation est représentée sur la figure 1A qui illustre le cas d'une prédiction temporelle pour un macrobloc courant à coder, noté $MBC_N$, d'une image N à coder conformément à la norme précitée. Dans l'exemple représenté, un tel macrobloc $MBC_N$ a une forme carrée et est de type 4x4. Le macrobloc $MBC_N$ est entouré par d'autres macroblocs BR1, BR2, BR3, BR4 qui sont situés au voisinage le plus proche de ce dernier et qui ont la même forme et taille que celles du macrobloc $MBC_N$.

Dans l'exemple représenté, le vecteur mouvement du macrobloc courant $MBC_N$, noté MV, pointe sur un macrobloc de référence $MBC_{N-1}$ d'une image de référence, notée N-1, qui est par exemple l'image précédente. Le macrobloc de référence $MBC_{N-1}$ a la même position que le macrobloc courant $MBC_N$ dans l'image précédente N-1. Une particularité du macrobloc de référence $MBC_{N-1}$ est qu'il recouvre des partitions de référence déjà codées puis décodées, notées BR'1, BR'2, BR'3 et BR'4 sur la figure 1A.

En application de la norme H264/AVC, le vecteur mouvement MV précité est prédit uniquement spatialement. Plus précisément, il est procédé au calcul d'un vecteur mouvement de référence qui est égal à un médian des vecteurs mouvement MV1, MV3, MV4, associés respectivement aux macroblocs de référence BR1, BR3, BR4. Dans certaines situations, le vecteur mouvement MV2, associé au macrobloc de référence BR2, peut être utilisé à la place de l'un des vecteurs MV1, MV3, MV4.

Par ailleurs, on voit depuis peu apparaître de nouveaux types de partitionnement du macrobloc courant à coder qui n'avaient pas été prévus dans la norme H264/AVC. Ainsi, comme représenté à la figure 1B, un macrobloc courant à coder $MBC_N$ peut être découpé en plusieurs partitions P1 à Pp de forme linéaire, en forme de L, ou bien de forme tout à fait arbitraire.

La norme H264/AVC ne prévoit pas de prédiction adaptée aux différents types de partitionnement de la figure 1B et au cas particulier où le macrobloc de référence ainsi partitionné recouvre plusieurs partitions de l'image de référence. Une telle situation est représentée sur la figure 1C qui illustre le cas d'une prédiction temporelle pour un macrobloc courant à coder, noté $MBC_N$, d'une image N à coder conformément à la norme précitée. Dans l'exemple représenté, un tel macrobloc $MBC_N$ est découpé selon trois partitions plus petites P1, P2, P3, qui sont de forme géométrique quelconque.

Dans l'exemple représenté, le vecteur mouvement de la première partition P1 du macrobloc courant $MBC_N$, noté MVp1, pointe sur une partition P'1 d'un macrobloc de référence $MBC_{N-1}$ d'une image de référence N-1 ayant la même position que le macrobloc courant $MBC_N$ dans l'image précédente N-1. Une particularité du macrobloc de référence $MBC_{N-1}$ est qu'il recouvre des partitions de référence déjà codées puis décodées, notées BR'1, BR'2, BR'3 et BR'4 sur la figure 1C.

En application de la norme H264/AVC, pour prédire le vecteur mouvement MVp1 précité, il est procédé au calcul d'un vecteur mouvement de référence qui est généralement égal à un médian spatial des vecteurs mouvement MV1, MV3, MV4, associés respectivement aux macroblocs de référence BR1, BR3, BR4.

Une telle prédiction spatiale du vecteur mouvement peut s'avérer manquer de précision compte tenu du fait que dans l'image N-1, il existe une différence de forme et de taille entre la partition de référence P'1 et les macroblocs de référence BR'1, BR'2, BR'3 et BR'4.

On connaît par ailleurs d'autres méthodes de calcul du vecteur mouvement prédicteur en vue de coder en Inter les partitions d'un macrobloc courant.

L'une d'entre elles est décrite dans la publication IEEE Transactions on Circuits and System for Vidéo Technology, Vol. 18, 1247-1257 (Sept.2008), de G Laroche, J. Jung, et B. Pesquet-Popescu et concerne les cas où, comme dans la norme H264/AVC, les macroblocs sont découpés selon une pluralité de partitions ayant généralement la forme de blocs de plus petite taille. Selon cette méthode, on prédit le vecteur mouvement d'un macrobloc d'une image courante par rapport à un vecteur de référence qui est choisi comme étant le vecteur pointant sur le pixel situé en haut et le plus à gauche du macrobloc ayant la même position que le macrobloc courant dans une image précédente.

Si l'on tente d'appliquer cette dernière méthode à la prédiction du vecteur MV de la figure 1A ou à celle du vecteur MVp1 de la figure 1C, les vecteurs MV et MVp1 seront chacun obtenus à partir d'un vecteur mouvement de référence qui est égal au vecteur mouvement MV'2 associé au macrobloc de référence BR'2, le pixel le plus à gauche du macrobloc de référence $MBC_{N-1}$ étant situé dans le macrobloc de référence BR'2 auquel est associé le vecteur mouvement MV'2.

La prédiction de vecteur mouvement obtenue avec cette méthode manque également de précision pour les mêmes raisons que celles évoquées plus haut. Les documents US 2008/063068 et EP1351510 concernent une technique de prédiction d'un vecteur mouvement d'une partition d'image courante par rapport à un vecteur mouvement d'une partition de référence voisine de la partition courante, dans l'image courante. Les documents WO 2008/082158 et JUAN LIU ET AL: "Adaptive Motion Vector Prédiction Based on Spatiotemporal Corrélation", WIRELESS COMMUNICATIONS, NETWORKING AND MOBILE COMPUTING, 2006. WICOM 2006.INTERNATIQNAL CONFERENCE ON, IEEE, 1 septembre 2006 (2006-09-01). Pages 1-4, XP031074482, concernent tous les deux une technique de prédiction d'un vecteur mouvement d'une partition d'image courante par rapport à un vecteur mouvement d'une partition de référence d'une image de référence qui est différente de l'image courante.

Objet et résumé de l'invention

Un des buts de l'invention est de remédier à des inconvénients de l'état de la technique précité.

A cet effet, selon un premier aspect, la présente invention concerne un procédé de prédiction de vecteur mouvement tel que défini dans la revendication 1.

Une telle disposition permet ainsi d'améliorer de façon importante la précision de la prédiction, en tenant compte :

- du partitionnement particulier du macrobloc courant ou du macrobloc de référence,
- des zones uniquement recouvertes des partitions de référence.

La prédiction selon l'invention est par ailleurs adaptable à tout type de méthode de calcul du vecteur mouvement prédit de la partition courante, telle qu'en particulier celle conforme à la norme H264/AVC et celle décrite dans la publication IEEE précitée.

Dans un mode de réalisation, la détermination du vecteur mouvement de la au moins une partition du bloc de l'image courante comprend les étapes de :

- calcul du nombre de pixels communs entre la au moins une partition de référence et respectivement les k bloc de référence recouverts,
- comparaison du nombre de pixels communs calculé entre les k blocs de référence recouverts, à partir d'un critère de comparaison prédéterminé.

Une telle disposition permet ainsi de sélectionner un vecteur mouvement de référence bien précis à partir d'une certaine caractéristique qui est ici fondée sur la quantité de pixels commun entre la partition de référence et les blocs de référence recouverts.

Selon une première variante, le critère de comparaison consiste en une sélection, parmi les k vecteurs mouvement de référence associés respectivement aux k blocs de référence recouverts, du vecteur mouvement de référence qui est associé au bloc de référence dont le nombre de pixels commun calculé est le plus élevé.

Selon une seconde variante, le critère de comparaison consiste en une pondération, par le nombre de pixels commun calculé, de la moyenne des k vecteurs mouvement de référence associés respectivement aux k blocs de référence recouverts.

Selon une troisième variante, le critère de comparaison consiste en une sélection, parmi les k vecteurs mouvement de référence associés respectivement aux k blocs de référence recouverts, du vecteur mouvement de référence qui est associé au bloc de référence recouvert qui a le plus de pixels à l'intérieur de la au moins une partition de référence qu'à l'extérieur de cette dernière.

Dans un autre mode de réalisation, la détermination du vecteur mouvement de la au moins une partition du bloc de l'image courante comprend les étapes de :

- calcul, pour chacun des k blocs de référence recouverts, d'un coefficient qui est fonction du gradient spatial de la au moins une partition de référence,
- sélection du coefficient dont la valeur calculée est la plus élevée,
- sélection du vecteur mouvement de référence qui correspond au bloc de référence recouvert dont le coefficient a été sélectionné.

Une telle disposition permet ainsi de sélectionner un vecteur mouvement de référence bien précis à partir d'une certaine caractéristique qui est ici fondée sur le calcul d'un coefficient qui exprime un degré de confiance dans le choix du vecteur mouvement de référence qui est supposé être plus précis dans une zone de l'image qui contient des discontinuités que dans une zone de l'image homogène.

Selon une variante, le vecteur mouvement de la au moins une partition du bloc de l'image courante est déterminé à la suite d'une étape de calcul de la moyenne des k vecteurs mouvement de référence associés respectivement aux k blocs de référence recouverts, une telle moyenne étant pondérée par les k coefficients calculés.

Dans encore un mode de réalisation, la détermination du vecteur mouvement de la au moins une partition du bloc de l'image courante comprend les étapes de :

- sélection d'un point particulier de la partition de référence,
- sélection du vecteur mouvement de référence associé au bloc de référence recouvert qui contient le point particulier sélectionné.

Une telle disposition permet ainsi de sélectionner un vecteur mouvement de référence bien précis à partir d'une certaine caractéristique qui est ici fondée sur une évaluation du positionnement de la partition de référence par rapport aux k blocs de référence recouverts.

Dans encore un mode de réalisation, la détermination du vecteur mouvement de la au moins une partition du bloc de l'image courante comprend les étapes de :

- identification, dans la partition de référence, d'une caractéristique relative au contenu de l'image,
- sélection du vecteur mouvement de référence associé au bloc de référence recouvert qui contient ladite caractéristique.

Une telle disposition permet ainsi de sélectionner un vecteur mouvement de référence bien précis à partir d'une certaine caractéristique qui est ici fondée sur l'identification d'un motif, d'une couleur, d'un contour, etc... dans la partition de référence.

Selon un second aspect, la présente invention concerne un procédé de codage d'une image ou d'une séquence d'images générant un flux de données comportant des données représentatives d'au moins une partition d'un bloc d'une image courante, un tel procédé comprenant une étape de prédiction de vecteur mouvement.

Selon l'invention, l'étape de prédiction d'un tel procédé de codage est effectuée conformément au procédé de prédiction précité.

Selon un troisième aspect, la présente invention concerne un procédé décodage d'un flux de données représentatif d'une image ou d'une séquence d'images, le flux comportant des données représentatives d'au moins une partition d'un bloc d'une image courante, un tel procédé comprenant une étape de prédiction d'un vecteur mouvement de ladite partition.

Selon l'invention, l'étape de prédiction d'un tel procédé de décodage est effectuée conformément au procédé de prédiction précité.

Corrélativement, selon un quatrième aspect, la présente invention concerne un dispositif de prédiction de vecteur mouvement selon la revendication 12.

Corrélativement, selon un cinquième aspect, la présente invention concerne un dispositif de codage d'une image ou d'une séquence d'images générant un flux de données comportant des données représentatives d'au moins une partition d'un bloc d'une image courante, un tel dispositif comprenant des moyens de prédiction d'un vecteur mouvement de ladite partition.

Selon l'invention, le dispositif de prédiction d'un tel dispositif de codage est conforme au dispositif de prédiction précité.

Corrélativement, selon un sixième aspect, la présente invention concerne un dispositif de décodage de décodage d'un flux de données représentatif d'une image ou d'une séquence d'images, le flux comportant des données représentatives d'au moins une partition d'un bloc d'une image courante, un tel dispositif comprenant des moyens de prédiction d'un vecteur mouvement de ladite partition.

Selon l'invention, le dispositif de prédiction d'un tel dispositif de décodage est conforme au dispositif de prédiction précité.

L'invention concerne encore un programme d'ordinateur comportant des instructions pour mettre en œuvre l'un des procédés selon l'invention, lorsqu'il est exécuté sur un ordinateur.

Le procédé de codage, le procédé de décodage, le dispositif de prédiction, le dispositif de codage et le dispositif de décodage présentent au moins les mêmes avantages que ceux conférés par le procédé de prédiction selon la présente invention.

Brève description des dessins

D'autres caractéristiques et avantages apparaîtront à la lecture d'un mode de réalisation préféré décrit en référence aux figures dans lesquelles:

- la figure 1A représente un exemple de prédiction temporelle de l'art antérieur qui exploite les corrélations temporelles entre un macrobloc courant à coder d'une image N et un macrobloc de référence d'une image précédente N-1, le macrobloc de référence ayant une forme carrée et recouvrant plusieurs macrobloc de référence voisins,
- la figure 1B représente un macrobloc découpé selon différents types de partitions de l'art antérieur,
- la figure 1C représente un exemple de prédiction temporelle de l'art antérieur qui exploite les corrélations temporelles entre un macrobloc courant à coder d'une image N et un macrobloc de référence d'une image précédente N-1, le macrobloc de référence étant découpé selon plusieurs partitions de forme arbitraire et recouvrant plusieurs macroblocs de référence voisins,

- la figure 2 représente les étapes du procédé de codage selon l'invention,
- la figure 3 représente un mode de réalisation d'un dispositif de codage selon l'invention,
- la figure 4 représente un exemple de prédiction temporelle selon l'invention qui exploite les corrélations temporelles entre le macrobloc courant à coder d'une image courante et les macroblocs de référence d'une image précédente,
- la figure 5 représente un dispositif de décodage selon l'invention,
- la figure 6 représente des étapes du procédé de décodage selon l'invention.

Description détaillée d'un mode de réalisation

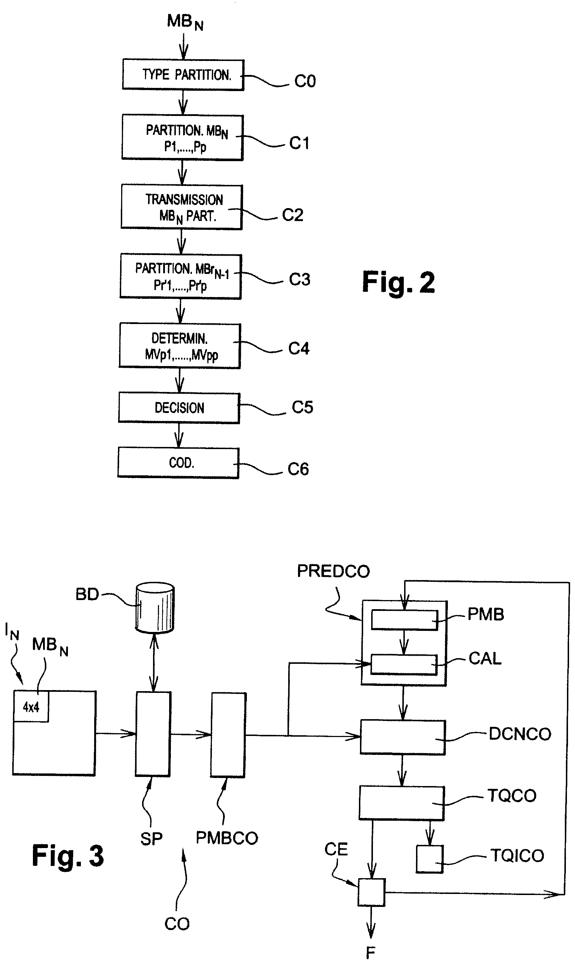

Un mode de réalisation de l'invention va maintenant être décrit, dans lequel le procédé de codage selon l'invention est utilisé pour coder en Inter une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C0 à C7, représentées à la **figure 2.**

Le procédé de codage selon l'invention est implémenté dans un dispositif de codage CO représenté à la **figure 3.**

La première étape C0, représentée à la **figure 2,** est la sélection, pour un macrobloc appartenant à une image de la séquence d'images à coder, notée $I_N$ sur la **figure 3,** d'un partitionnement particulier associé à ce macrobloc.

Il convient de noter que l'étape C0 peut être facultative, la prédiction du vecteur mouvement du macrobloc courant pouvant être effectuée en considérant ce dernier dans sa totalité, c'est-à-dire comme une seule et unique partition.

Au cours de l'étape C0, un macrobloc $MB_N$, par exemple de taille 4x4, et appartenant à l'image $I_N$, est appliqué en entrée d'un module SP de sélection de partitionnement représenté à la **figure 3.**

Ce module de partitionnement SP utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998). Elles ne seront donc pas décrites plus avant.

Les différents types d'algorithmes de partitionnement possibles sont regroupés dans une base de données BD du codeur CO. Ils permettent d'obtenir un découpage du macrobloc courant en une pluralité de partitions soit de forme rectangulaire ou carrée, soit d'autres formes géométriques, telles que par exemple des formes sensiblement linéaires, soit de forme tout à fait arbitraire.

Dans l'exemple représenté, le module de sélection SP sélectionne un partitionnement de type arbitraire.

L'étape suivante C1 représentée à la **figure 2** est le découpage du macrobloc $MB_N$ en un nombre de p partitions à prédire.

Le macrobloc $MB_N$ est découpé en par exemple trois partitions P1, P2 et P3 de forme arbitraire. Un tel découpage est effectué par un module PMBCO de partitionnement de macroblocs représenté à la **figure 3** qui utilise un algorithme classique de partitionnement.

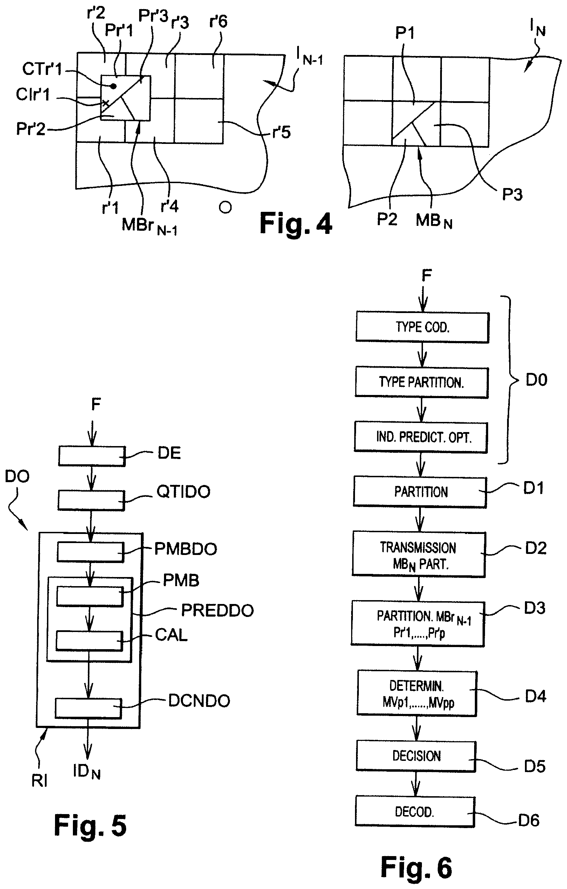

La **figure 4** représente le macrobloc $MB_N$ qui a été obtenu après un tel partitionnement.

A la suite de l'étape de partitionnement C1, au cours d'une étape C2 représentée à **la figure 2,** le module de partitionnement PMBCO transmet le macrobloc $MB_N$ qui vient d'être partitionné à un module de prédiction PREDCO représenté à **la figure 3.**

De façon classique, un tel module de prédiction PREDCO est destiné à prédire le macrobloc courant $MB_N$ partitionné par rapport à un macrobloc de référence déjà codé puis décodé, noté $MBr_{N-1}$ sur la **figure 4,** lequel a la même position que le macrobloc courant $MB_N$ dans une image précédente $I_{N-1}$ qui a été préalablement découpée à l'issue d'un codage puis d'un décodage, en une pluralité de n partitions r'1, r'2,....,r'n.

Conformément à l'invention, le macrobloc de référence $MBr_{N-1}$ recouvre un ensemble de k partitions de référence r'1, r'2,...r'k, avec k≤n. Dans l'exemple représenté, le macrobloc de référence $MBr_{N-1}$ recouvre partiellement les quatre partitions de référence r'1, r'2, r'3 et r'4. Il va de soi que dans d'autres modes de réalisation possibles, le macrobloc de référence $MBr_{N-1}$ peut recouvrir complètement une ou plusieurs des partitions de référence r'1, r'2, r'3 et r'4.

En référence à **la figure 3,** un tel macrobloc de référence $MBr_{N-1}$ est codé conformément à la norme H.264/MPEG-4AVC, c'est-à-dire qu'il subit, de façon connue en soi:

- un codage par transformée en cosinus discrète et quantification qui est effectué par un module TQCO de transformée et de quantification,
- puis un décodage par transformée en cosinus discrète inverse et quantification inverse, lequel est effectué par le module TQICO de transformée et de quantification inverse.

En référence toujours à la **figure 3,** le module de prédiction PREDCO comprend, selon l'invention:

- un module de partitionnement PMB destiné à découper le macrobloc de référence $MBr_{N-1}$ selon une pluralité de partitions de référence,
- un module de calcul CAL destiné à calculer chaque vecteur mouvement MVp1, MVp2,...,MVpp qui sont associés respectivement aux partitions P1, P2,...,Pp du macrobloc courant $MB_N$, à partir d'une fonction d'au moins un vecteur mouvement de référence appartenant à un ensemble de k vecteurs mouvement de référence MVr'1, MVr'2,..., MVr'k qui sont associés respectivement aux k partitions de référence recouvertes r'1, r'2,...,r'k.

Au cours de l'étape C3 représentée à la **figure 2,** le module de partitionnement PMB de la **figure 3** procède au découpage du macrobloc de référence $MBr_{N-1}$ selon p partitions de référence. Dans l'exemple représenté à la **figure 4,** le macrobloc de référence $MBr_{N-1}$ est découpé de façon identique au macrobloc courant $MB_N$, soit selon trois partitions Pr'1, Pr'2 et Pr'3 qui sont toutes de forme et de taille différentes.

Au cours de l'étape C4 représentée à la **figure 2,** le module de calcul CAL de la **figure 3** calcule, pour chaque partition courante P1, P2 et P3, le vecteur mouvement prédit MVp1, MVp2 et MVp3 qui lui est associé, selon les différentes méthodes selon l'invention décrites ci-dessous.

Selon une première méthode, le module CAL détermine le vecteur mouvement prédit MVp1 de la partition courante P1 en fonction des vecteurs mouvement de référence MVr'1, MVr'2, MVr'3 et MVr'4 associés respectivement aux quatre partitions de référence recouvertes r'1, r'2, r'3 et r'4 représentées à la **figure 4.** Une telle détermination consiste par exemple à calculer la moyenne des vecteurs mouvement de référence MVr'1, MVr'2, MVr'3 et MVr'4 conformément à l'équation ci-dessous:

$$MVp1=Moy\ (MVr'1,\ MVr'2,\ MVr'3,\ MVr'4)$$

Selon une seconde méthode, en référence à la **figure 4,** le module CAL détermine le vecteur mouvement prédit MVp1 comme étant égal au vecteur mouvement de référence associé à la partition de référence recouverte ayant le plus grand nombre de pixels en commun avec la partition de référence Pr'1 du macrobloc de référence $MBr_{N-1}$.

Dans l'exemple représenté à la **figure 4,** MVp1=MVr'2.

Selon une première variante de cette seconde méthode, le module CAL détermine le vecteur mouvement prédit MVp1 comme étant égal au vecteur mouvement de référence associé à la partition de référence recouverte qui a le plus fort pourcentage de pixels en commun avec la partition de référence Pr'1 du macrobloc de référence $MBr_{N-1}$.

Dans l'exemple représenté **figure 4,** MVp1=MVr'2.

Selon une seconde variante de cette seconde méthode, le module CAL détermine une moyenne des vecteurs mouvement de référence MVr'1, MVr'2, MVr'3 et MVr'4 qui est pondérée par le nombre de pixels commun entre la partition de référence Pr'1 du macrobloc MBr$_{N-1}$ et chacune des partitions de référence recouvertes r'1, r'2, r'3 et r'4. Une telle détermination revient à calculer le vecteur mouvement prédit MVp1 conformément à l'équation ci-dessous:

$$MVp1 = \frac{1}{T}\left[\sum_{k=1}^{K}\lceil pr'1 \cap r'_k \rceil \cdot MVr'k\right]$$

avec :

- K=4,
- T représentant le nombre de pixels constituant le macrobloc de référence MBr$_{N-1}$,
- $\lceil Pr'1 \cap r'k \rceil$ représentant le nombre de pixels commun entre la partition de référence Pr'1 du macrobloc MBr$_{N-1}$ et chacune des partitions de référence recouvertes r'1, r'2, r'3 et r'4.

Dans l'exemple représenté à la **figure 4,** MVp1=MVr'2.

A titre d'alternative, la moyenne précitée peut être pondérée par le nombre de pixels communs moins le nombre de pixels non communs.

Une autre alternative consiste à pondérer la moyenne par le pourcentage de pixels en commun entre la partition Pr'1 du macrobloc de référence MBr$_{N-1}$ et chacune des partitions de référence r'1, r'2, r'3 et r'4.

Encore une autre alternative est de déterminer le vecteur mouvement prédit MVp1 comme étant égal au vecteur mouvement de référence associé à la partition de référence recouverte qui a le plus de pixels à l'intérieur de Pr'1 qu'à l'extérieur de Pr'1.

Selon une troisième méthode, en référence à la **figure 4,** le module de calcul CAL :

- détermine, pour chacune des k partitions de référence recouvertes r'1, r'2, r'3, r'4, un coefficient C$_k$ (avec k=4) qui est fonction du gradient spatial g de ladite partition de référence Pr'1,
- sélectionne le coefficient C$_j$ (avec 1≤j≤k) dont la valeur calculée est la plus élevée, conformément à l'équation ci-dessous:

$$C_j = \arg\max_k\{C_k\} \text{ où } C_k = \frac{1}{\lceil Pr'1 \cap r'_k \rceil}\sum_{i=1}^{\lceil Pr'1 \cap r'_k \rceil}\sqrt{g_x^2(i) + g_y^2(i)}$$

Cette troisième méthode propose une première alternative selon laquelle le module de calcul CAL détermine le vecteur mouvement prédit MVp1 comme étant égal au vecteur mouvement de référence associé à la partition de référence recouverte correspondant au coefficient calculé C$_j$.

Cette troisième méthode propose une seconde alternative selon laquelle le module de calcul CAL détermine le vecteur mouvement prédit MVp1 comme étant égal à la moyenne des vecteurs mouvement de référence MVr'1, MVr'2, MVr'3 et MVr'4 qui est pondérée par les coefficients calculés C$_1$, C$_2$, C$_3$, C$_4$.

Selon une quatrième méthode, en référence à la **figure 4,** le module de calcul CAL identifie en premier lieu un point particulier de la partition de référence Pr'1, par exemple le centre de cette dernière, noté CTr'1. Le centre CTr'1 est calculé au moyen d'un algorithme qui minimise la somme des distances par rapport à tous les points de la partition de référence Pr'1.

En second lieu, le module de calcul CAL détermine le vecteur mouvement prédit MVp1 comme étant égal au vecteur mouvement de référence associé à la partition de référence recouverte qui contient le point particulier sélectionné, soit le centre CTr'1. Dans l'exemple représenté, c'est la partition de référence r'2 qui contient le centre CTr'1 et donc MVp1= MVr'2.

Selon une cinquième méthode, en référence à la **figure 4,** le module de calcul CAL identifie en premier lieu, dans la partition de référence Pr'1, une caractéristique particulière relative au contenu de l'image. Dans l'exemple représenté, une telle caractéristique est illustrée par une croix incrustée dans l'image I$_{N-1}$, notée Clr'1.

En second lieu, le module de calcul CAL détermine le vecteur mouvement prédit MVp1 comme étant égal au vecteur mouvement de référence associé à la partition de référence recouverte qui contient la caractéristique sélectionnée, soit la croix Clr'1. Dans l'exemple représenté, c'est la partition de référence r'1 qui contient la croix Clr'1 et donc MVp1= MVr'1.

A titre d'alternative à cette cinquième méthode, la caractéristique relative au contenu de l'image peut être une couleur particulière, un motif particulier, un contour qui traverse la partition de référence Pr'1, ou autres particularités de l'image brisant l'homogénéité de cette dernière.

A l'issue de ladite étape de calcul C4 selon l'une ou l'autre des méthodes précitées selon l'invention, le module de calcul de prédiction PREDCO délivre alors un premier vecteur prédit MVp1 qui, dans le cas où celui-ci est retenu par le codeur CO comme étant le type de vecteur mouvement optimal, est immédiatement codé par le module de transformée et de quantification TQCO, puis décodé par le module TQICO de transformée et de quantification inverse, lesquels sont représentés à la **figure 3.**

L'étape C4 précitée est ensuite réitérée de façon à prédire les autres vecteurs mouvement MVp2 et MVp3 qui sont associés respectivement aux partitions P2 et P3 du macrobloc courant $MB_N$.

Une fois différentes prédictions possibles calculées par le module de calcul de prédiction PREDCO, au cours d'une étape C5 représentée à la **figure 2,** un module de décision DCNCO, représenté à la **figure 3,** parcourt les macroblocs partitionnés de l'image $I_N$ et choisit, dans cette étape C5, le mode de prédiction utilisé pour coder chacun de ces macroblocs. Parmi les prédictions possibles pour un macrobloc, le module de décision DCNCO choisit la prédiction optimale selon un critère débit distorsion bien connu de l'homme du métier.

En référence à la **figure 2,** chaque macrobloc prédit est codé, au cours d'une étape C6, comme dans la norme H.264/MPEG-4 AVC.

En référence à la **figure 3,** une fois ce codage structurel effectué par le module de décision DCNCO, les coefficients de résidus s'ils existent, correspondants aux blocs de l'image $I_N$, sont envoyés au module TQCO de transformée et de quantification, pour subir des transformées en cosinus discrètes puis une quantification. Les tranches de macroblocs avec ces coefficients quantifiés sont ensuite transmises à un module CE de codage entropique représenté, pour produire, avec les autres images de la séquence vidéo déjà codées de la même façon que l'image $I_N$, un flux vidéo F, binaire, codé selon l'invention.

Le flux binaire F ainsi codé est transmis par un réseau de communication, à un terminal distant. Celui-ci comporte un décodeur DO selon l'invention, représenté à la **figure 5.**

Le flux binaire F est d'abord envoyé à un module DE de décodage entropique, décodage inverse de celui effectué par le module de codage entropique CE représenté à **la figure 3.** Puis, pour chaque macrobloc d'image à reconstruire, les coefficients décodés par le module DE sont envoyés à un module QTIDO de quantification inverse et de transformée inverse.

Un module RI de reconstruction d'image reçoit alors des données décodées correspondant aux données produites par le module DCNCO **(figure 3)** à l'étape C5 de codage selon l'invention, aux erreurs de transmission près. Le module RI met en œuvre des étapes D0 à D6 du procédé de décodage selon l'invention, telle que représentées à la **figure 6.** Un tel procédé de décodage selon l'invention est également implémenté de manière logicielle ou matérielle par modifications d'un décodeur initialement conforme à la norme H.264/MPEG-4 AVC.

La première étape D0 est le décodage de structures de données codées dans une tranche d'un macrobloc courant de l'image $I_N$ à décoder. De façon connue en soi, le module de reconstruction RI détermine à partir des données de ladite tranche de macrobloc:

- le type de codage desdites données, Intra ou Inter: Inter selon l'invention,
- le type de partitionnement du macrobloc à reconstruire, Inter 4x4, 8x8, ligne, etc...: Inter 4x4 dans le mode de réalisation décrit,
- l'indice du prédicteur optimal tel que sélectionné par le module de décision DCNCO à l'étape C5 précitée.

L'étape suivante D1 représentée à la **figure 6** est le découpage du macrobloc courant à décoder, conformément au partitionnement déterminé à l'étape D0. A cet effet, en référence à la **figure 5,** un module PMBDO de partitionnement de macroblocs, qui ressemble en tous points à celui représenté à la **figure 3,** découpe le macrobloc en une pluralité de p partitions, soit trois partitions de forme arbitarire dans l'exemple représenté.

Au cours d'une étape D2 représentée à la **figure 6,** le module de partitionnement PMBDO transmet le macrobloc courant à décoder et qui vient d'être partitionné en p=3 partitions, à un module de prédiction PREDDO représenté à la **figure 5,** qui est en tous points semblable au module de prédiction PREDCO du codeur CO de la **figure 3,** et qui, pour cette raison, ne sera pas décrit à nouveau en détail.

Au cours des étapes D3 et D4 représentées à la **figure 6,** le module de prédiction PREDDO de la **figure 5** effectue le même algorithme que celui effectué par le module de prédiction PREDCO du codeur CO précité, de façon à obtenir un macrobloc courant dont les vecteurs mouvement associés ont été prédits conformément à l'une ou l'autre des méthodes décrites ci-dessus.

Au cours d'une étape D5, un module de décision DCNDO choisit la prédiction optimale selon un critère débit distorsion bien connu de l'homme du métier.

Chaque macrobloc prédit est ensuite décodé, au cours d'une étape D6, comme dans la norme H.264/MPEG-AVC.

Une fois tous les macroblocs de l'image $I_N$ décodés, en référence à la **figure 5,** le module RI de reconstruction d'image fournit en sortie du décodeur DO, une image $ID_N$ correspondant au décodage de l'image $I_N$.

Compte tenu du fait que l'algorithme de prédiction effectué au décodeur DO est en tous point le même que celui effectué au codeur CO, le coût de l'information induit par les prédicteurs utilisés s'en trouve fortement réduit.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

1. Procédé de prédiction d'un vecteur mouvement d'au moins une partition (P1 ; $MB_N$) d'un bloc d'une image courante par rapport à un vecteur mouvement d'au moins une partition de référence (Pr'1 ; $MBr_{N-1}$) d'un bloc de référence correspondant au bloc courant, dans une image de référence qui est différente de l'image courante et qui est partitionnée en une pluralité de n blocs de référence (r'1, r'2,...,r'n) déjà codés puis décodés, ledit vecteur mouvement de ladite au moins une partition du bloc de l'image courante pointant dans l'image de référence sur ladite au moins une partition de référence ayant la même forme que ladite au moins une partition du bloc de l'image courante, ledit procédé étant **caractérisé en ce que** dans le cas où ladite au moins une partition de référence recouvre un ensemble de k blocs de référence parmi ladite pluralité de n blocs de référence (r'1, r'2,...,r'n) de l'image de référence, avec k≤n, ledit vecteur mouvement de ladite au moins une partition du bloc de l'image courante est déterminé à partir d'au moins un vecteur mouvement de référence appartenant à un ensemble de k vecteurs mouvement de référence (MVr'1, MVr'2,...,MVr'k) associés respectivement aux k blocs de référence recouverts,
la détermination du vecteur mouvement de ladite au moins une partition du bloc de l'image courante comprenant les étapes de :

   - sélection d'un point particulier de la partition de référence, ledit point particulier étant le centre de ladite partition de référence,
   - sélection du vecteur mouvement de référence associé au bloc de référence recouvert qui contient le centre de ladite partition de référence.

2. Procédé de prédiction selon la revendication 1, dans lequel le centre de ladite partition de référence est calculé au moyen d'un algorithme qui minimise la somme des distances par rapport à tous les points de ladite partition de référence.

3. Procédé de codage d'une image ou d'une séquence d'images générant un flux (F) de données comportant des données représentatives d'au moins une partition d'un bloc d'une image courante, ledit procédé comprenant une étape de prédiction d'un vecteur mouvement de ladite au moins une partition,
ledit procédé étant **caractérisé en ce que** ladite prédiction est effectuée conformément au procédé selon la revendication 1 ou la revendication 2.

4. Procédé de décodage d'un flux (F) de données représentatif d'une image ou d'une séquence d'images, ledit flux comportant des données représentatives d'au moins une partition d'un bloc d'une image courante, ledit procédé comprenant une étape de prédiction d'un vecteur mouvement de ladite au moins une partition,
ledit procédé étant **caractérisé en ce que** ladite prédiction est effectuée conformément au procédé selon la revendication 1 ou la revendication 2.

5. Dispositif de prédiction (PREDCO) d'un vecteur mouvement d'au moins une partition d'un bloc (P1 ; $MB_N$) d'une image courante par rapport à un vecteur mouvement d'au moins une partition de référence (Pr'1 ; $MBr_{N-1}$) d'un bloc de référence correspondant au bloc courant, dans une image de référence qui est différente de l'image courante et qui est partitionnée en une pluralité de n blocs de référence (r'1, r'2,...,r'n) déjà codés puis décodés, ledit vecteur mouvement de ladite au moins une partition du bloc de l'image courante pointant dans l'image de référence sur ladite au moins une partition de référence ayant la même forme que ladite au moins une partition du bloc de l'image courante, le dispositif de prédiction étant **caractérisé en ce que** dans le cas où ladite au moins une partition de référence recouvre un ensemble de k blocs de référence parmi ladite pluralité de n blocs (r'1, r'2,...,r'n) de l'image de référence, avec k≤n, le dispositif de prédiction comprend un module (CAL) de calcul apte à déterminer ledit vecteur mouvement de ladite au moins une partition du bloc de l'image courante à partir d'au moins un vecteur mouvement de référence appartenant à un ensemble de k vecteurs mouvement de référence (MVr'1, MVr'2,...,MVr'k) associés respectivement aux k blocs de référence recouverts,
ledit module de calcul comprenant :

- des moyens de sélection d'un point particulier de ladite au moins une partition de référence, ledit point particulier étant le centre de ladite partition de référence,
- des moyens de sélection du vecteur mouvement de référence associé au bloc de référence recouvert qui contient le centre de ladite partition de référence.

**6.** Dispositif de codage (CO) d'une image ou d'une séquence d'images générant un flux (F) de données comportant des données représentatives d'au moins une partition d'un bloc d'une image courante, ledit dispositif comprenant des moyens de prédiction d'un vecteur mouvement de ladite au moins une partition dudit bloc, **caractérisé en ce que** lesdits moyens de prédiction sont contenus dans un dispositif de prédiction (PREDCO) conforme au dispositif selon la revendication 5.

**7.** Dispositif (DO) de décodage d'un flux (F) de données représentatif d'une image ou d'une séquence d'images, ledit flux (F) comportant des données représentatives d'au moins une partition d'un bloc d'une image courante, ledit dispositif comprenant des moyens de prédiction d'un vecteur mouvement de ladite au moins une partition dudit bloc, **caractérisé en ce que** lesdits moyens de prédiction sont contenus dans un dispositif de prédiction (PREDDO) conforme au dispositif selon la revendication 5.

**8.** Programme d'ordinateur comportant des instructions pour mettre en œuvre l'un des procédés selon l'une quelconque des revendications 1 à 4, lorsqu'il est exécuté sur un ordinateur.

**Patentansprüche**

**1.** Verfahren zur Vorhersage eines Bewegungsvektors mindestens einer Partition (P1; $MB_N$) eines Blocks eines aktuellen Bildes in Bezug auf einen Bewegungsvektor mindestens einer Referenzpartition (Pr'1; $MBr_{N-1}$) eines dem aktuellen Block entsprechenden Referenzblocks in einem Referenzbild, das sich von dem aktuellen Bild unterscheidet und das in eine Vielzahl von n bereits codierten, anschließend decodierten Referenzblöcken (r'1, r'2,...,r'n) partitioniert ist, wobei der Bewegungsvektor der mindestens einen Partition des Blocks des aktuellen Bildes in dem Referenzbild auf die mindestens eine Referenzpartition zeigt, die dieselbe Form wie die mindestens eine Partition des Blocks des aktuellen Bildes aufweist,
wobei das Verfahren **dadurch gekennzeichnet ist, dass** in dem Fall, in dem die mindestens eine Referenzpartition einen Satz von k Referenzblöcken aus der Vielzahl von n Referenzblöcken (r'1, r'2,...,r'n) des Referenzbildes abdeckt, mit k ≤ n, der Bewegungsvektor der mindestens einen Partition des Blocks des aktuellen Bildes anhand von mindestens einem Referenzbewegungsvektor bestimmt wird, der zu einem Satz von k Referenzbewegungsvektoren (MVr'1, MVr'2,...,MVr'k) gehört, die jeweils mit den abgedeckten k Referenzblöcken assoziiert sind,
wobei das Bestimmen des Bewegungsvektors der mindestens einen Partition des Blocks des aktuellen Bildes die folgenden Schritte beinhaltet:

- Auswählen eines speziellen Punktes der Referenzpartition, wobei der spezielle Punkt der Mittelpunkt der Referenzpartition ist,
- Auswählen des Referenzbewegungsvektors, der mit dem abgedeckten Referenzblock, der den Mittelpunkt der Referenzpartition enthält, assoziiert ist.

**2.** Vorhersageverfahren nach Anspruch 1, wobei der Mittelpunkt der Referenzpartition mit Hilfe eines Algorithmus berechnet wird, der die Summe der Abstände in Bezug auf alle Punkte der Referenzpartition minimiert.

**3.** Verfahren zur Codierung eines Bildes oder einer Folge von Bildern, das einen Datenstrom (F) erzeugt, der Daten umfasst, die für mindestens eine Partition eines Blocks eines aktuellen Bildes repräsentativ sind, wobei das Verfahren einen Schritt des Vorhersagens eines Bewegungsvektors der mindestens einen Partition beinhaltet,
wobei das Verfahren **dadurch gekennzeichnet ist, dass** die Vorhersage gemäß dem Verfahren nach Anspruch 1 oder Anspruch 2 durchgeführt wird.

**4.** Verfahren zur Decodierung eines Datenstroms (F), der für ein Bild oder eine Folge von Bildern repräsentativ ist, wobei der Strom Daten umfasst, die für mindestens eine Partition eines Blocks eines aktuellen Bildes repräsentativ sind, wobei das Verfahren einen Schritt des Vorhersagens eines Bewegungsvektors der mindestens einen Partition beinhaltet,
wobei das Verfahren **dadurch gekennzeichnet ist, dass** die Vorhersage gemäß dem Verfahren nach Anspruch 1 oder Anspruch 2 durchgeführt wird.

**5.** Vorrichtung zur Vorhersage (PREDCO) eines Bewegungsvektors mindestens einer Partition eines Blocks (P1; $MB_N$) eines aktuellen Bildes in Bezug auf einen Bewegungsvektor mindestens einer Referenzpartition (Pr'1; $MBr_{N-1}$) eines dem aktuellen Block entsprechenden Referenzblocks in einem Referenzbild, das sich von dem aktuellen Bild unterscheidet und das in eine Vielzahl von n bereits codierten, anschließend decodierten Referenzblöcken (r'1, r'2,...,r'n) partitioniert ist, wobei der Bewegungsvektor der mindestens einen Partition des Blocks des aktuellen Bildes in dem Referenzbild auf die mindestens eine Referenzpartition zeigt, die dieselbe Form wie die mindestens eine Partition des Blocks des aktuellen Bildes aufweist, wobei die Vorhersagevorrichtung **dadurch gekennzeichnet ist, dass** in dem Fall, in dem die mindestens eine Referenzpartition einen Satz von k Referenzblöcken aus der Vielzahl von n Blöcken (r'1, r'2,...,r'n) des Referenzbildes abdeckt, mit $k \leq n$, die Vorhersagevorrichtung ein Berechnungsmodul (CAL) beinhaltet, das fähig ist, den Bewegungsvektor der mindestens einen Partition des Blocks des aktuellen Bildes anhand von mindestens einem Referenzbewegungsvektor zu bestimmen, der zu einem Satz von k Referenzbewegungsvektoren (MVr'1, MVr'2,...,MVr'k) gehört, die jeweils mit den abgedeckten k Referenzblöcken assoziiert sind,
wobei das Berechnungsmodul Folgendes beinhaltet:

- Mittel zum Auswählen eines speziellen Punktes der mindestens einen Referenzpartition, wobei der spezielle Punkt der Mittelpunkt der Referenzpartition ist,
- Mittel zum Auswählen des Referenzbewegungsvektors, der mit dem abgedeckten Referenzblock, der den Mittelpunkt der Referenzpartition enthält, assoziiert ist.

**6.** Vorrichtung zur Codierung (CO) eines Bildes oder einer Folge von Bildern, die einen Datenstrom (F) erzeugt, der Daten umfasst, die für mindestens eine Partition eines Blocks eines aktuellen Bildes repräsentativ sind, wobei die Vorrichtung Mittel zum Vorhersagen eines Bewegungsvektors der mindestens einen Partition des Blocks beinhaltet, **dadurch gekennzeichnet, dass** die Vorhersagemittel in einer Vorhersagevorrichtung (PREDCO) gemäß der Vorrichtung nach Anspruch 5 enthalten sind.

**7.** Vorrichtung (DO) zur Decodierung eines Datenstroms (F), der für ein Bild oder eine Folge von Bildern repräsentativ ist, wobei der Strom (F) Daten umfasst, die für mindestens eine Partition eines Blocks eines aktuellen Bildes repräsentativ sind, wobei die Vorrichtung Mittel zum Vorhersagen eines Bewegungsvektors der mindestens einen Partition des Blocks beinhaltet,
**dadurch gekennzeichnet, dass** die Vorhersagemittel in einer Vorhersagevorrichtung (PREDDO) gemäß der Vorrichtung nach Anspruch 5 enthalten sind.

**8.** Computerprogramm, das Anweisungen zum Implementieren eines der Verfahren nach einem der Ansprüche 1 bis 4 umfasst, wenn es auf einem Computer ausgeführt wird.

## Claims

**1.** Method for predicting a motion vector of at least one partition (P1; $MB_N$) of a block of a current image with respect to a motion vector of at least one reference partition (Pr'1; $MBr_{N-1}$) of a reference block corresponding to the current block, in a reference image which is different from the current image and which is partitioned into a plurality of n reference blocks (r'1, r'2,...,r'n) that have already been coded and decoded, said motion vector of said at least one partition of the block of the current image pointing, in the reference image, to said at least one reference partition that has the same shape as said at least one partition of the block of the current image,
said method being **characterized in that,** in the case in which said at least one reference partition overlaps a set of k reference blocks from among said plurality of n reference blocks (r'1, r'2,...,r'n) of the reference image, with $k \leq n$, said motion vector of said at least one partition of the block of the current image is determined on the basis of at least one reference motion vector belonging to a set of k reference motion vectors (MVr'1, MVr'2, ..., MVr'k) associated respectively with the k overlapped reference blocks,
the determination of the motion vector of said at least one partition of the block of the current image comprising the steps of:

- selecting a particular point of the reference partition, said particular point being the centre of said reference partition,
- selecting the reference motion vector associated with the overlapped reference block which contains the centre of said reference partition.

**2.** Prediction method according to Claim 1, wherein the centre of said reference partition is calculated by means of an algorithm which minimizes the sum of the distances with respect to all the points of said reference partition.

**3.** Method for coding an image or a sequence of images generating a data stream (F) including data representative of at least one partition of a block of a current image, said method comprising a step of predicting a motion vector of said at least one partition,
said method being **characterized in that** said prediction is performed in accordance with the method according to Claim 1 or Claim 2.

**4.** Method for decoding a data stream (F) representative of an image or of a sequence of images, said stream including data representative of at least one partition of a block of a current image, said method comprising a step of predicting a motion vector of said at least one partition,
said method being **characterized in that** said prediction is performed in accordance with the method according to Claim 1 or Claim 2.

**5.** Device (PREDCO) for predicting a motion vector of at least one partition (P1; $MB_N$) of a block of a current image with respect to a motion vector of at least one reference partition (Pr'1; $MBr_{N-1}$) of a reference block corresponding to the current block, in a reference image which is different from the current image and which is partitioned into a plurality of n reference blocks (r'1, r'2,...,r'n) that have already been coded and decoded, said motion vector of said at least one partition of the block of the current image pointing, in the reference image, to said at least one reference partition that has the same shape as said at least one partition of the block of the current image, the prediction device being **characterized in that,** in the case in which said at least one reference partition overlaps a set of k reference blocks from among said plurality of n blocks (r'1, r'2,...,r'n) of the reference image, with k≤n, the prediction device comprises a calculation module (CAL) that is able to determine said motion vector of said at least one partition of the block of the current image on the basis of at least one reference motion vector belonging to a set of k reference motion vectors (MVr'1, MVr'2,...,MVr'k) associated respectively with the k overlapped reference blocks, said calculation module comprising:

- means for selecting a particular point of said at least one reference partition, said particular point being the centre of said reference partition,
- means for selecting the reference motion vector associated with the overlapped reference block which contains the centre of said reference partition.

**6.** Device (CO) for coding an image or a sequence of images generating a data stream (F) including data representative of at least one partition of a block of a current image, said device comprising means for predicting a motion vector of said at least one partition of said block,
**characterized in that** said prediction means are contained in a prediction device (PREDCO) in accordance with the device according to Claim 5.

**7.** Device (DO) for decoding a data stream (F) representative of an image or of a sequence of images, said stream (F) including data representative of at least one partition of a block of a current image, said device comprising means for predicting a motion vector of said at least one partition of said block,
**characterized in that** said prediction means are contained in a prediction device (PREDDO) in accordance with the device according to Claim 5.

**8.** Computer program including instructions for implementing one of the methods according to any one of Claims 1 to 4, when it is executed on a computer.

ART ANTERIEUR

**Fig. 1A**

ART ANTERIEUR

**Fig. 1B**

ART ANTERIEUR

**Fig. 1C**

**Fig. 2**

**Fig. 3**

**Fig. 4**

**Fig. 5**

**Fig. 6**

## RÉFÉRENCES CITÉES DANS LA DESCRIPTION

**Documents brevets cités dans la description**

- US 2008063068 A
- EP 1351510 A

- WO 2008082158 A

**Littérature non-brevet citée dans la description**

- **DE G LAROCHE ; J. JUNG ; B. PESQUET-POPESCU.** *IEEE Transactions on Circuits and System for Vidéo Technology,* Septembre 2008, vol. 18, 1247-1257

- Adaptive Motion Vector Prédiction Based on Spatio-temporal Corrélation. **JUAN LIU et al.** WIRELESS COMMUNICATIONS, NETWORKING AND MOBILE COMPUTING, 2006. WICOM 2006.INTERNATIQNAL CONFERENCE ON. IEEE, 01 Septembre 2006, 1-4
- **G.J. SULLIVAN ; T.WIEGAND.** Rate-distortion optimization for video compression. *IEEE Signal Proc. Mag.,* 1998, 74-90